(19) Europäisches Patentamt
European Patent Office
Office européen des brevets

(11) **EP 2 728 261 B1**

(12) **EUROPEAN PATENT SPECIFICATION**

(45) Date of publication and mention of the grant of the patent:
**19.04.2017 Bulletin 2017/16**

(21) Application number: **13189803.3**

(22) Date of filing: **23.10.2013**

(51) Int Cl.:
**F23R 3/14** *(2006.01)* **F23R 3/28** *(2006.01)*
**F23R 3/36** *(2006.01)* **F23C 7/00** *(2006.01)*

(54) **Burner with axial swirler and method for operating said burner**

Brenner mit Axialverwirbeler und Verfahren zum Betrieb des Brenners

Brûleur avec Dispositif de tourbillonnement axial et procédé d'opération

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2012 EP 12191345**

(43) Date of publication of application:
**07.05.2014 Bulletin 2014/19**

(73) Proprietor: **General Electric Technology GmbH**
**5400 Baden (CH)**

(72) Inventors:
• **Biagioli, Fernando**
**5442 Fislisbach (CH)**
• **Poyyapakkam, Madhavan Narasimhan**
**6343 Rotkreuz (CH)**
• **Cenni, Riccardo**
**48025 Riolo Terme (RA) (IT)**
• **Syed, Khawar**
**5452 Oberrohrdorf (CH)**

(74) Representative: **Bernotti, Andrea et al**
**Studio Torta S.p.A.**
**Via Viotti, 9**
**10121 Torino (IT)**

(56) References cited:
EP-A1- 1 394 471       EP-A2- 0 902 237
EP-A2- 0 936 406       WO-A1-02/052201
GB-A- 2 293 001       US-A- 6 050 096
US-A1- 2008 148 736   US-A1- 2011 005 232

**Description**

TECHNICAL FIELD

The present invention relates to a burner for a combustion chamber comprising an axial swirler, in particular for premixing purposes in gas turbines, according to the preamble of claim 1. In particular it relates to axial swirlers for the introduction of at least one gaseous and/or liquid into a burner. Moreover, it relates to a method of operation of such a burner.

PRIOR ART

Swirlers are used as mixing devices in various technical applications. Optimization of swirlers aims at reducing the energy required to obtain a specified degree of homogeneity of a mixture. In continuous flow mixing the pressure drop over a mixing device is a measure for the required energy. Further, the time and space required to obtain the specified degree of homogeneity are important parameters for the evaluation of mixing devices or mixing elements. Swirlers are typically used for mixing of two or more continuous fluid streams. Axial swirlers are most commonly used as premixers in gas turbine combustors.

A so-called swirl number $s_n$ characterizes the swirl strength of an axial swirler. The swirl number is defined as the ratio between the axial flux of azimuthal momentum and the axial flux of axial momentum multiplied by the swirler radius. The swirl number is an indication of the intensity of swirl in the annular flow induced by the swirler.

The larger is the swirl number, the larger is the pressure drop entailing an unfavorable energy loss.

Conventional Axial swirlers with upstream fuel injection typically produce unfavorable wakes and recirculation regions at the fuel injection location.

Axial swirlers with fuel injection via the swirlers, so-called swozzles, require for good air-fuel mixing swirl numbers that are so high that it is difficult to avoid wakes and flow-separation regions at the fuel injection location and trailing edge.

Dual annular counter-rotating axial swirlers result in a radially varying velocity distribution that is unfavorable for the combustion process for e.g. poor flame holding resistance and combustion dynamics.

US-A1-2008148736 discloses a burner according to the preamble of claim 1.

SUMMARY OF THE INVENTION

It is an object of the present invention to provide a burner with more effective axial swirler, in particular for premixing of oxidizer, *e.g.* air, and fuel in gas turbines, with improved mixing characteristics, *i. e.* producing an increased mixing homogeneity and stability for a given gas pressure drop over the swirler.

A swirler that produces a mixture with a high mixing homogeneity while using only a minimum pressure drop is proposed. Further, a burner with such a swirler is proposed. Such a burner is proposed for example to increase the gas turbine engine efficiency, to increase the fuel capability as well as to simplify the design.

The above and other objects are achieved by a burner according to claim 1.

It is preferred that all swirl vanes are provided with such a monotonically increasing discharge flow angle.

An increasing discharge flow angle with increasing radial distance from the axis entails increasing swirl with increasing radial distance.

Said discharge flow angle is located at the trailing edge and may be monotonically increasing (*i.e.* it may be constant over a certain but not the entire range of distance to the swirler axis) or it may be strictly monotonically increasing (*i.e.* it increases over the entire range; there is no sub-range in which the discharge flow angle remains constant).

A cut through the swirl vane parallel to the swirler axis of the swirler discloses said streamline cross-section.

According to to the invention, the swirl vane of the axial swirler is formed such that the dependence of the discharge flow angle $\alpha$ on said radial distance R is implicitly given by a function:

$$\tan[\alpha(R)] = K \cdot R^\beta + H,$$

wherein β is an exponent ranging from 1 to 12, preferably from 1 to 10, more preferably from 3 to 8, and being in particular 7. *K* and *H* are constants chosen such

iii) that the discharge flow angle $\alpha(R_{min})$ at a minimum radial distance $R_{min}$ is ranging from 0 degrees to 25 degrees, preferably from 0 or 5 degrees to 20 degrees; and

iv) that the discharge flow angle $\alpha(R_{max})$ at a maximum radial distance $R_{max}$ is ranging from 30 degrees to 60 degrees, preferably 30 degrees to 50 degrees, more preferably 35 degrees to 45 degrees.

The minimum radial distance $R_{min}$ is the distance from the swirler axis to the inner side or the inner lateral surface of the swirl vane. The maximum radial distance $R_{max}$ is the distance from the swirler axis to the outer side or the outer lateral surface of the swirl vane. If the swirl vanes are provided in an annular housing, $R_{min}$ is thus the radius of the cylinder described by the inner limiting wall of the housing, whereas $R_{max}$ is the radius of the cylinder described by the outer limiting wall of the housing. The annulus thus extends in radial direction from $R_{min}$ to $R_{max}$.

The invention is thus characterized by an exit or discharge flow angle of which tangent *i. e.* the hyperbolic function tangent with the angle as argument) increases radially outward proportionally to $R^{\beta}$, with $R$ radius and $\beta$ exponent. $K$ is a multiplicative constant to $R^{\beta}$, $H$ is an additive constant to $R^{\beta}$. Particularly preferred is a value $\beta = 7$, wherein the swirler has a swirl number of $s_n = 0.4$. $H$ and $K$ may be negative or positive. *H may* be zero.

In other words, $K$ and $H$ are constants chosen such that a minimum of the discharge flow angle $\alpha$ is ranging from 0 degrees to 25 degrees, preferably from 0 or 5 degrees to 20 degrees and a maximum of the discharge flow angle $\alpha$ is ranging from 30 degrees to 60 degrees, preferably 30 degrees to 50 degrees, more preferably 35 degrees to 45 degrees.

Such a discharge flow angle at the trailing edge allows a 'shearing' radial profile of axial velocity being developed in the gas flow through the swirler, for sufficiently high value of the parameter $\beta$. An increasing twisting of at least the downstream half of the swirl vane further supports the development of such a shearing radial profile.

As a result the swirler as described above may have a very low swirl number close to minimum values necessary to achieve vortex breakdown (here, the swirl number $s_n$ is about 0.4) while achieving the required mixing quality in the mixture. Consequently, operating at lower pressure drops, higher flashback margin, improved flame stability and lower NOx-emissions are possible. The swirler allows a rapid mixing. This concept alleviates several of well-known issues in the 1st stage combustor or premixed combustor. Fuel-air mixing is further improvable by using sufficiently high values of the exponent $\beta$ (which reduces the swirl number and increases the velocity shearing) and by injecting fuel through one side, preferably through both sides of the swirl vane(s). The swirler according to invention offers clean aerodynamics and enhanced mixing characteristics that are desirable for premixed combustion.

The swirler proposed here allows injecting fuel on both sides of the swirl vane or blade (*i.e.* its pressure and suction side). This helps in achieving optimal fuel-air premixing in several ways:

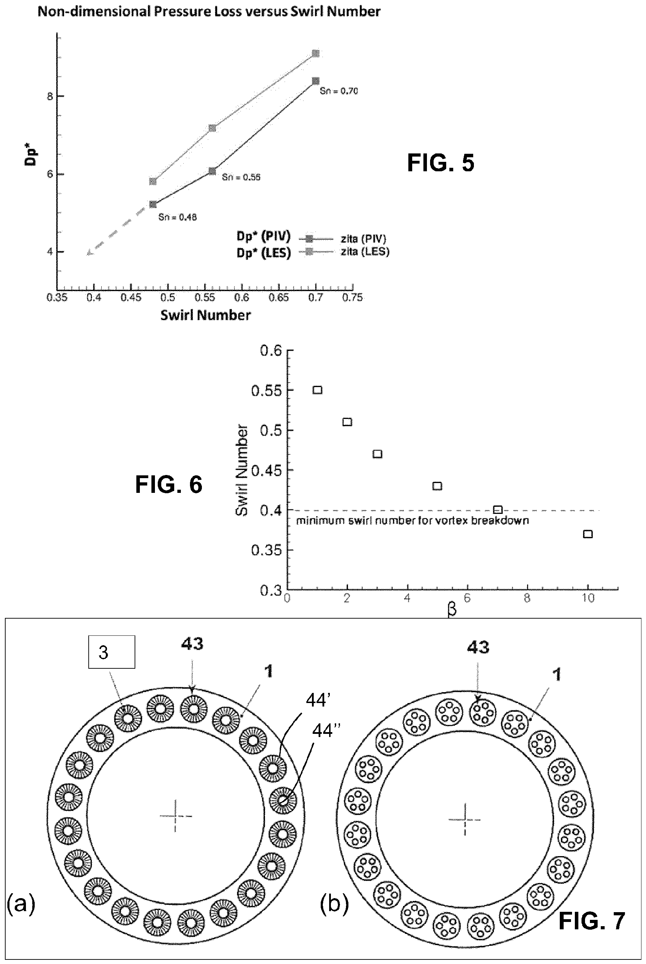

- The exponentially increasing exit flow angle produces shearing in the axial velocity, which enhances turbulence and mixing.
- Two-side fuel injection fills the fuel in the entire cross-section of the swirler exit.
- The increase in $\beta$ allows for a reduction of the swirl number (*cf.* Fig. 5) and the pressure losses (*cf.* Fig. 6).

With optimal choice of the parameter $\beta \approx 7$ in vicinity of the minimum swirl number 0.4 for vortex breakdown (*cf.* Fig. 6), the suggested design modification results in choosing a reduced swirl number of the axial swirler, thereby reducing the pressure drop requirements for the premixer. The savings in pressure drop can result in targeting higher efficiency or make it available for other useful purposes.

In addition the axial swirler is advantageous as:

- it improves premixing of fuel with air;
- the reduced pressure drop allows for a more compact burner design, higher bulk velocities, and results in improved flashback resistance.

The length and swirl angle of the axial swirler is also controlled in relation to the overall mixer performance. The lower swirl angle helps in reducing the flow gradients due to the suction/pressure sides of the swirler.

For a fixed value of the burner pressure drop, the present design allows for more compact size with improvements in NOx-emissions.

An axial swirler with a discharge or exit flow angle given by *tan*-formula as described above allows a 'shearing' radial profile of axial velocity for sufficiently high value of the parameter $\beta$. Also, it allows reduction of pressure drop for high values of the parameter $\beta$ without losing efficiency in fuel-air premixing.

Typically, between 4 and 20 vanes are used per axial swirler. In one embodiment between 5 to 15 vanes, e.g. 7, 8, or 10 vanes are used per swirler. To avoid unfavorable resonance phenomena due to excitation of Eigen frequencies in the flow downstream of the vanes, having an odd number of vanes is preferred.

According to a preferred embodiment the leading edge of the swirl vane is an essentially straight edge preferably extending in radial direction and/or the camber line of the swirl vane is curved to form a C-shape or an S-shape.

According to the invention, the trailing edge is curved. Preferably, the trailing edge is twisted or rotated with respect to the leading edge, preferably such that the trailing edge extends with increasing distance from the swirl axis increasingly in the direction in that the pressure side of the swirl vane faces. The angle of twisting or rotation may be 0 to 45 degrees or 50 degrees, preferably 5 degrees to 35 degrees, more preferably 10 degrees to 20 degrees or 25 degrees.

Preferably, said curvature of the trailing edge is concave with respect to the suction side.

Further, it is preferred that the swirl vanes are arranged around the swirler axis essentially in a circle.

Preferably, the swirler is provided with an annular housing with an outer limiting wall and an inner limiting wall, wherein the swirl vanes extend along the axis of the swirler and from the inner limiting wall through the annulus to the outer limiting wall. The cross-sectional shape of the inner tube of the annular housing, *i. e.* the inner limiting wall, defines on how the swirl vanes are arranged with respect to one another. Preferably, the inner tube has a round or circular cross-sectional shape.

According to one embodiment the housing is extending with a central axis aligned with them main-flow direction. The resulting swirler has inlet area and an outlet area, which are normal to the central axis to form an axial swirler.

In yet another preferred embodiment the leading edge and/or the trailing edge extend radially in a plane perpendicular to the swirler axis.

It is preferred that all the swirl vanes of the swirler are identically shaped or structured. This minimized production costs and simplifies the design and the assembling of the device.

Within a burner, the swirler as described above leads to a good mixing at low pressure drop but also to a high recirculation flow in a subsequent combustor. A high recirculation flow leads to a better, more stable combustion. Typically the flame stability improves with the recirculation flow, *i.e.* combustion pulsations can be avoided or reduced with increasing recirculation flow $r_r$ in a combustion chamber, where $r_r$ is defined as the ratio of recirculated flow to swirl flow. However, to achieve a high relative recirculation flow $r_r$, a high swirl number $s_n$ is required, where $s_n$ is defined as the ratio of swirl flow to total mass flow through the burner. Since a swirl flow can only be imposed with a pressure drop, the swirl number $s_n$ should be kept low for an optimized performance, *i.e.* power and efficiency of the gas turbine.

The burner comprising an axial swirler as described above is characterized in that at least one of the swirl vanes is configured as an injection device with at least one fuel nozzle for introducing at least one fuel into the burner.

The burner can comprise one swirler or a plurality of swirlers. A burner with one swirler typically has a circular cross section. A burner comprising a plurality of swirlers can have any cross-section but is typically circular or rectangular. Typically a plurality of burners is arranged coaxially around the axis of a gas turbine. The burner cross-section is defined by a limiting wall, which for example forms a can-like burner.

In a preferred embodiment the burner under full load injects fuel from the suction side or the pressure side of at least one, preferable of all swirl vanes. Under partial load the fuel injection may be staged as described below.

In a particularly preferred embodiment, the fuel is injected on the suction side and the pressure side of each swirler vane, *i.e.* from both sides of the injecting swirl vane simultaneously. This allows for a design with a low critical swirl number and reduced pressure drop. The injection from the pressure side is driven by the flow toward the minimum radius, *i. e.* toward the swirl axis, thereby filling the radially inner part of the annulus of the annular housing, while injection from the suction side is driven radially outward, thereby filling the radially outer part of the annulus. This is a consequence of the discharge flow angle according to invention and may be enhanced by having the trailing edge running with increasing distance from the axis, *i.e.* radially outwardly, increasingly in the direction in that the pressure side faces. The critical swirl number $s_n$ for this design can be much lower than the standard designs to fill the radially inner and outer regions.

Preferably, each flow slot, being created between circumferentially adjacent swirl vanes of the series or plurality of swirl vanes, has a gas entrance region that extends downstream-from the leading edges (typically along the upstream third or upstream half of the swirl vane) and a gas discharge region that extends upstream from the trailing edges of its defining swirl vanes (typically along the downstream stream third or downstream half of the swirl vane), wherein the fuel is injected into the flow slot in the gas entrance region, preferably in the (first) upstream third of the swirl vane (*i.e.* close to the leading edge) and/or preferably in a cross-flow injection.

According to one embodiment a plurality of fuel nozzles is distributed in said upstream third of the length of the swirl vane measured along the swirl axis, more preferably only in the upstream quarter of said length.

It is preferred that the fuel is injected by a series of fuel nozzles, *e.g.* 4 to 12, preferably 6 nozzles, being preferably arranged one adjacent another in radial direction along the vane surface or essentially parallel to the leading edge, wherein the fuel nozzles are circular and/or are elongated slot nozzles extending essentially parallel to the leading edge of the swirl vane and/or comprise a first nozzle for injection of liquid fuel, and/or a second nozzle for injection of a gaseous fuel and a third nozzle for injection of carrier air, which encloses the first nozzle and/or the second nozzle.

This carrier air then also serves for cooling purposes of the fuel, thereby effectively avoiding flashback problems.

According to the invention, the swirl vane is provided with cooling elements, for introduction of cooling air through the axial swirler in particular to avoid flashback. Preferably these cooling elements are given by internal circulation of cooling medium along the sidewalls of the vane body (*i.e.* by providing the vanes with a double wall structure) and/or by film cooling holes, preferably located near the leading or trailing edge, and wherein most preferably the cooling elements are fed with air from the carrier gas feed also used for the fuel injection. A plurality of separate outlet orifices or a plurality of nozzles can be arranged next to one another for introduction of cooling air. Cooling air may be introduced through the suction and/or the pressure side of a part of or of all swirl vanes.

The burner can be used for fuel-air mixing as well as mixing of fuel or gas with any kind of gas used in closed or semi-closed gas turbines or with combustion gases of a first combustion stage.

The burner can be used for gas turbines comprising one compressor, one combustor and one turbine as well as for gas turbines with one or multiple compressors, at least two combustors and at least two turbines. They can for example be used as premix burners in a gas turbine with one combustor or also be used in a reheat combustor for a secondary combustion chamber of a gas turbine with sequential combustion having a first and a second combustion chamber, with an injection device for the introduction of at least one gaseous and/or liquid fuel into the burner.

Besides an improved burner comprising the swirler, a method for operation of such a burner according to claim 9 is an objective of the invention. Depending on the operating condition and load point of a gas turbine, the fuel-flow injected through a burner varies in a wide range. A simple operation where the flow is equally distributed to all burner nozzles and the flow through each nozzle is proportional to the total flow can lead to undesirably small flow velocities at individual nozzles, impairing the injection quality and penetration depth of the fuel into the air flow.

It is preferred that the fuel injection is staged below a threshold fuel flow, *e.g.* if the turbine is performing at partial load, such that the fuel is in one embodiment injected only on the suction side or the pressure side and/or only through every second or third fuel nozzle of a swirl vane and/or that fuel is only injected through the fuel nozzles of every second or third vane of the burner.

Further, the combination of both methods to reduce fuel injection is suggested: For low fuel mass flows the fuel is injected through every second or third fuel nozzle of a vane and only through the fuel nozzles of every second or third vane of the burner is proposed. At an increased mass flow the number of vanes used for fuel injection and then the number of nozzles used for fuel injection per vane can be increased.

The staging between the suction and pressure sides and/or different nozzles allows further optimization of the premixing and control of the combustion dynamics. Fuel staging allows controlling emissions and pulsations.

In another embodiment, different fuel may be injected through the suction sides and through pressure sides and/or through different nozzles of the swirl vanes.

According to one embodiment of the operating method, the number of fuel injection nozzles through which fuel is injected is determined as function of the total injected fuel flow in order to assure a minimum flow in the operative nozzles.

Alternatively, at an increased mass flow the number of nozzles used for fuel injection per vane can be increased and then the number of vanes used for fuel injection and can be increased. Activation and deactivation of nozzles can for example be determined based on corresponding threshold fuel flows.

Typically, at least the nozzle injects fuel (liquid or gas) and/or carrier gas essentially perpendicular to the main flow direction (cross-flow injection). At least one nozzle may, however, also inject fuel and/or carrier gas at an inclination angle.

Preferably, the vane extends across the entire flow cross section between opposite walls of the burner. Preferably, the fuel nozzles are distributed over the whole width of the swirl vane (*i.e.* from inner to outer limiting wall).

At least one slit-shaped outlet orifice can be, in the sense of a nozzle, arranged at the trailing edge. A split-shaped or elongated slot nozzle is typically arranged to extend along the trailing edge of the vane.

The nozzles can comprise multiple outlet orifices for different fuel types and carrier air. In one embodiment a first nozzle for injection of liquid fuel or gas fuel, and a second nozzle for injection of carrier air, which encloses the first nozzle, are arranged at the trailing edge.

In another embodiment a first nozzle for injection of liquid fuel, a second nozzle for injection of a gaseous fuel, which encloses the first nozzle, and a third nozzle for injection of carrier air, which encloses the first nozzle, and the second nozzle, are arranged at the trailing edge.

Moreover, it is preferred that the fuel is a highly reactive fuel, preferably chosen from the group consisting of natural gas fuels, hydrogen rich fuels, and hydrogen fuel.

Furthermore the present invention relates to the use of a burner as defined above for the combustion under high reactivity conditions, preferably for the combustion at high burner inlet temperatures and/or for the combustion of MBtu fuel, normally with a calorific value of 5'000-20'000 kJ/kg, preferably 7'000-17'000 kJ/kg, more preferably 10'000-15'000 kJ/kg, most preferably such a fuel comprising hydrogen gas.

Preferably the axial swirler and the burner described above is used in an annular combustor, a can combustors, or a single or reheat engines.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1      shows a schematic perspective view onto a conventional swirler with swirl vanes having trailing edges with conventional discharge flow angles $\alpha(R)$ = const.;

Fig. 2      shows two exemplary dependences $\alpha(R)$ of a discharge flow angle $\alpha$ on a distance $R$ to the swirler axis of an axial swirler according to function:

$$\tan[\alpha(R)] = K \cdot R^{\beta} + H;$$

Fig. 3      shows two exemplary swirl blades or vanes according to invention with respective $R$-dependences with exponent $\beta$ = 1 and $\beta$ = 10 according to Fig. 2 and function

$$\tan[\alpha(R)] = K \cdot R^{\beta} + H;$$

Fig. 4      shows a schematic perspective view of swirl vanes as arranged in an axial swirler configuration with $\beta$ = 1, wherein (a) shows a configuration of swirl vanes causing high swirl (high swirl number $s_n$) and (b) shows a configuration of swirl vanes causing a low swirl (low swirl number $s_n$);

Fig. 5      shows the non-dimensional pressure loss over the swirler scaling with the swirl number of the swirler as from experiments and CFD calculations;

Fig. 6      shows the dependence of the swirl number $s_n$ on the exponent $\beta$ as given by function: $\tan[\alpha(R)] = K \cdot R^{\beta} + H$ with minimum discharge flow angle $\alpha(R_{min})$ = 20 degrees and maximum discharge flow angle $\alpha(R_{max})$ = 50 degrees; and

Fig. 7      shows in (a) an example of an annular combustor with burners comprising one swirler per burner as well as in (b) an example of an annular combustor with a burner comprising five swirlers per burner.

DESCRIPTION OF PREFERRED EMBODIMENTS

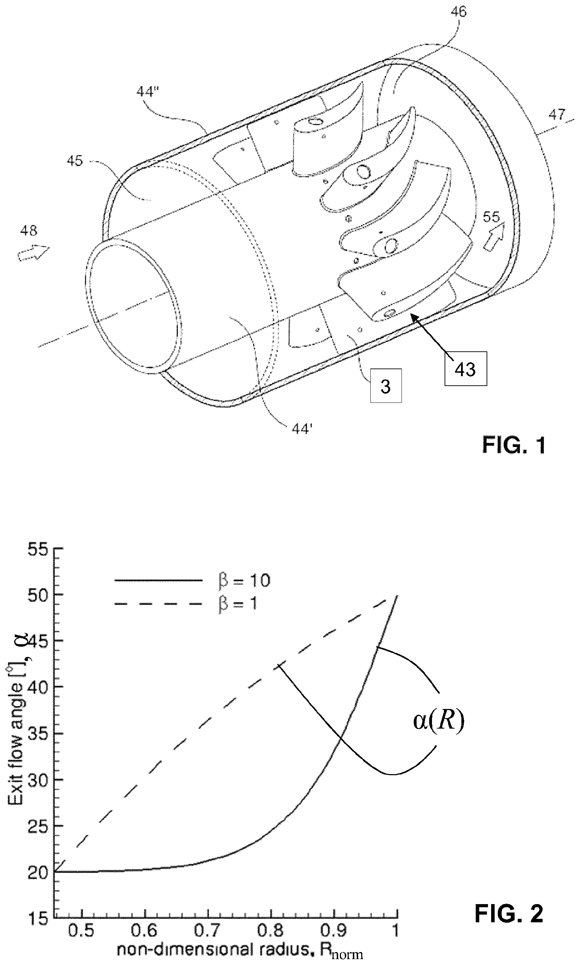

**Figure 1** shows Fig. 1 shows a schematic perspective view onto a conventional swirler 43. The swirler 43 comprises an annular housing with an inner limiting wall 44', an outer limiting wall 44", an inlet area 45, and an outlet area 46. Vanes 3 are arranged between the inner limiting wall 44' and outer limiting wall 44". The swirl vanes 3 are provided with a discharge flow angle that does not depend on a distance $R$ from a swirl axis 47, but is constant throughout the annulus. The leading edge area of each vane 3 has a profile, which is oriented parallel to the inlet flow direction 48. In the example shown the inflow is coaxial to the longitudinal axis 47 of the swirler 43. The profiles of the vanes 3 turn from the main flow direction 48 to impose a swirl on the flow, and resulting in an outlet-flow direction 55, which has an angle relative to the inlet flow direction 48. The main flow is coaxial to the annular swirler. The outlet flow is rotating around the axis 47 of the swirler 43. The present invention improves the swirl vanes 3 by providing them with a discharge flow angle that varies with distance $R$.

**Figure 2** shows two examples of dependences of the discharge or exit flow angle $\alpha$ on the radial distance $R$ to the swirler axis 47, wherein the dependences are implicitly defined by the function:

$$\tan[\alpha(R)] = K \cdot R^{\beta} + H.$$

The dashed line is for an exponent value $\beta$ = 1 and the solid line for an exponent value $\beta$ = 10. $R_{norm}$ is defined as $R_{norm}$ [dimensionless] = $R$ [in meters] / $<R_{max}$[in meters]; $R_{norm}$ is normalized with the maximum value $R_{max}$ of the distance $R$ to the swirler axis 47 value, hence dimensionless.

For $\beta$ = 1: $K$ has a value of about 1.5. $H$ has a value of about -0.33.

For $\beta$ = 10: $K$ has a value of about 0.8. $H$ has a value of about 0.36.

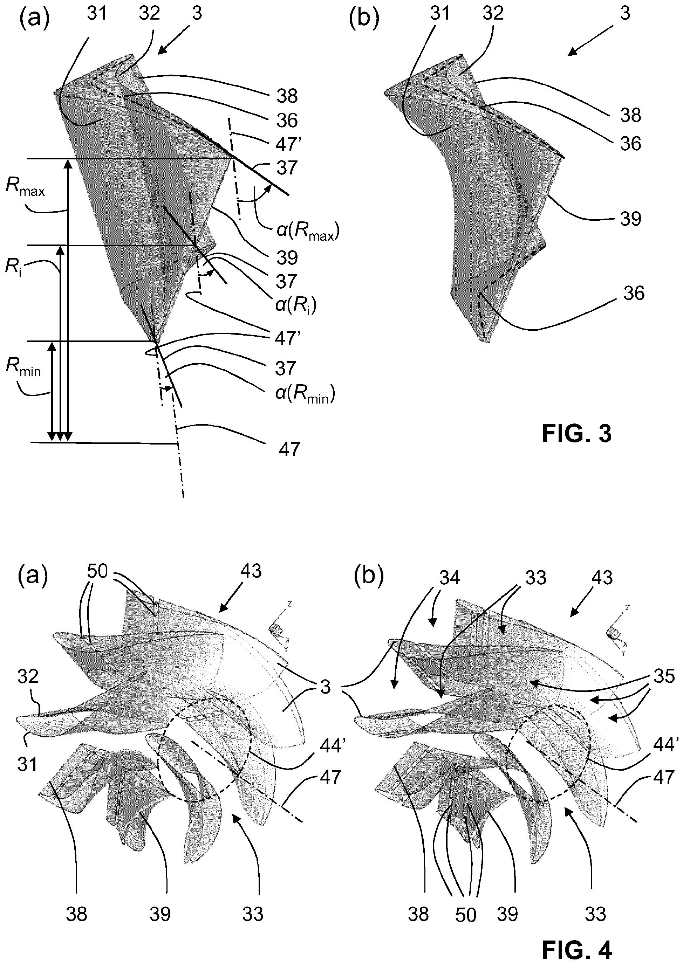

**Figure 3** shows two embodiments of the swirler blade 3 that both satisfy the above mentioned function of Fig. 2 with $\beta$ = 1 (Fig. 3(a)) and $\beta$ = 10 (Fig. 3(b)).

The swirler vanes 3 shown in Fig. 3 extend from a leading edge 38 to a trailing edge 39. The leading edge area of each vane 3 has a profile, which is oriented essentially parallel to the inflow. The inflow is coaxial to the longitudinal axis 47 of the swirler 43. The profiles of the vanes 3 turn from the main flow direction 48, *i.e.* in downstream direction the streamline profile twists and bends such as to form a smoothly shaped suction side 31 and pressure side 32. This shape imposes a swirl on the flow and results in an outlet-flow direction, which has an angle relative to the inlet flow direction 48. The main flow is coaxial to the annular swirler. The outlet flow is rotating around the axis 47 of the swirler 43.

In the embodiment of vanes according to Fig. 3, both edges 38, 39 are each essentially straight and each arranged in a plane normal to axis 47. The trailing edge 39 is, with respect to the leading edge 38, vertically shifted in Fig. 3 (out of the drawing layer, *i.e.* trailing edge 39 lies above leading edge 38). As depicted in Fig. 3, the trailing edge 38 is also horizontally shifted (to the left in the drawing layer). Furthermore, the trailing edge 39 is rotated clockwise by about 20 degrees with respect to the leading edge 38.

The suction side 31 (facing to the left in Fig. 3) and the pressure side 32 (facing to the right in Fig. 3) extend from the leading edge 38 downstream to the trailing edge 39. The surface progression of sides 31 and 32 is smooth. The suction side 31 is essentially concavely shaped in the direction of the axis 47 and the pressure side 32 is essentially convexly shaped in the direction of the axis 47. In the direction of the leading edge 38, the suction side 31 of vane 3 according to Fig. 3(a) is essentially flat or slightly concavely shaped and the suction side 31 of vane 3 according to Fig. 3(b) is concavely shaped, whereas the pressure side 32 of vane 3 according to Fig. 3(a) is essentially flat or slightly convexly shaped and the pressure side 32 of vane 3 according to Fig. 3(b) is essentially convexly shaped. The trailing edge 39 is essentially straight and rotated, *i.e.* it runs, with increasing R, in the direction in which the pressure side 32 faces. The discharge flow angle $\alpha$ increases with increasing distance R.

The vanes 3 in Fig. 3 cause the gas flow on the pressure side 32 to be driven toward the minimum radius $R_{min}$, thereby filling the inner part of the annulus, while the gas flow on suction side 31 is driven radially outwardly toward the maximum radius $R_{max}$, thereby filling the outer part of the annulus.

At the trailing edge 39 of Fig. 3(a) three positions, *i.e.* three values for the radial distance R are indicated, namely for a minimum value $R_{min}$, an intermediate value $R_i$, and a maximum value $R_{max}$.

At all three positions a parallel line 47' to the swirl axis 47 is indicated as a dashed-dotted line. Furthermore, a camber line 36 (see dashed line in Fig. 3), given by a cut of a center surface between surfaces 31, 32 of vane 3 and cross-sectional plane, is indicated as solid line at positions $R_{min}$, $R_i$, $R_{max}$. The corresponding $\alpha$-values are indicated as $\alpha(R_{min})$, $\alpha(R_i)$, $\alpha(R_{max})$. It is apparent, that $\alpha$ is increasing with increasing $R$.

**Figure 4** shows in each subfigure (a) and (b) a schematic perspective view of the swirl vanes 3 as arranged in the axial swirler 43. The annular housing around swirler axis 47, with limiting walls 44, 44", inlet 45, and outlet 46 are not shown. The inner limiting wall 44' of the housing is indicated by a dashed circle. In Fig. 4, the *R*-dependence of the discharge flow angle $\alpha$ is following the above mentioned *tan*-function with $\beta = 1$. Eight swirl vanes 3 are shown. Between the swirl vanes 3, *i.e.* between a convex pressure side 32 of one vane 3 and a concave suction side 31 of a circumferentially adjacent vane 3, flow slots 33 with a gas entrance region 34 in the upstream third near the leading edge 38 and a gas discharge region 35 in the downstream third near the trailing edge 39 are formed. Each swirl vane 3 has a straight leading edge 38 and a curved trailing edge 39. The trailing edge 39 is convexly curved with respect to the suction side 31. Such curved trailing edge allows achievement of the desired radial distribution of $\alpha(R)$ without moving the position of maximum camber too close to the extreme positions (leading and trailing edges), i.e. within 30% distance from the leading edge and 20% distance from the trailing edge.

In Fig. 4(a) a high swirl configuration, *i.e.* a swirler with a low swirl number $s_n$ of 0.7 is shown, whereas in Fig. 4 (b) a swirler with a lower swirl, *i.e.* with a lower swirl number than the embodiment in Fig. 4(a) is shown ($s_n$ of about 0.5 to 0.6). In other words, the vanes 3 of the embodiment of Fig. 4(a) are more twisted than the vanes 3 of the embodiment of Fig. 4(b).

In Fig. 4(a) fuel nozzles 50 are shown, which are arranged on the pressure side 32 of each vane 3. The six fuel nozzles 50 of one vane 3 are arranged in an essentially straight or straight line, essentially parallel or parallel to the leading edge 38, in the upstream third of the vane 3, *i.e.* in the gas entrance region 34.

In Fig. 4(b) the fuel nozzles 50 are arranged on the pressure side 32 as described above and, additionally, the suction side 31 is provided with nozzles 50. The fuel nozzles 50 on the suction side 31 are also arranged in the gas entrance region 34, such that one fuel nozzle 50 from the suction side 31 is opposite one nozzle 50 on the pressure side 32 of the same vane 3.

Fuel injection through fuel nozzles 50 on both sides 31, 32 leads to a higher mixing quality, as fuel injected from pressure side 32 is driven by the flow toward the minimum radius $R_{min}$, thereby filling the inner part of the annulus, while fuel injected from the suction side 31 is driven radially outwardly toward $R_{max}$, thereby filling the outer part of the annulus. The unmixedness of the fuel-air mixture after premixing with swirler 43 is decreased by a factor of about 10 when changing from one-side fuel injection to two-side fuel injection.

Unmixedness represents a measure of fuel/air premixing at molecular level in a turbulent flow. The definition is such that unmixedness is zero (U=0) for fully molecularly premixed condition and one (U=1) for molecularly segregated conditions.

**Figure 5** shows the (non-dimensional) pressure drop Dp* with as a function of the swirl number $s_n$ from experiments and CFD calculations. It clearly shows that the pressure drop Dp* decreases for smaller swirl numbers $s_n$.

**Figure 6** shows the dependence of the swirl number $s_n$ on the parameter $\beta$ for $\alpha(R_{min})$ = 20 degrees and $\alpha(R_{max})$ = 50 degrees. It is apparent that a $\beta$-value of about 7 may be chosen to reach the minimum swirl number of about 0.4 for vortex breakdown. I.e. with $\beta \approx 7$ vortex breakdown is achieved with sn $\approx 0.4$.

The swirl number is can be obtained by:

$$s_n = \frac{\int_{R_{MIN}}^{R_{MAX}} U\ W\ R^2\ dR}{R_{MAX} \int_{R_{MIN}}^{R_{MAX}} U^2\ \ R\ dR}$$

with the radius of the swirler R, the axial component of the velocity U and tangential components of velocity W at radius.

**Figure 7** shows in (a) and (b), from a downstream end, examples of an annular combustors with burners 1 comprising swirlers 43 with swirl vanes 3 with a discharge flow angle $\alpha$ according to invention. The burners 1 are distributed equally spaced on circle around the center axis of a gas turbine and discharge the combustible mixture of fuel and gas into an annular combustor. In the example shown in Fig. 7(a) each burner 1 comprises one swirler 43. The vanes 3 are indicated schematically. In the example shown in Fig. 7(b) exemplarily a number of five swirlers 43 are arranged in a circular pattern in each burner 1.

The burners of Figs. 7(a) and (b) can also be used in combination with a plurality of can combustors instead of in one annular combustor.

LIST OF REFERENCE SIGNS

| 1 | burner | 45 | inlet area |
|---|---|---|---|
| 3 | swirl vane | 46 | oulet area |
| 31 | suction side of 3 | 50 | fuel nozzle |
| 32 | pressure side of 3 | 55 | outlet flow direction |
| 33 | flow slot | | |
| 34 | gas entrance region | $\alpha$ | discharge flow angle |
| 35 | gas discharge region | $\beta$ | exponent |
| 36 | camber line of 3 | H, K | constant |
| 37 | tangent to 36 | R | radial distance of 3 to 47 |
| 38 | leading edge of 3 | $\alpha(R)$ | R-dependence of $\alpha$ |
| 39 | trailing edge of 3 | $R_{min}$ | minimum R |
| 43 | axial swirler | $R_i$ | R-value between $R_{min}$ and $R_{max}$ |
| 47 | swirler axis, longitudinal axis of 43 | $R_{max}$ | maximum R |
| 47' | parallel line to 47 | $\alpha(R_{min})$ | minimum $\alpha$ |
| 48 | inlet flow direction | $\alpha(R_{max})$ | maximum $\alpha$ |
| 44 | limiting wall | $r_r$ | recirculation rate |
| 44' | inner limiting wall | $S_n$ | swirl number |
| 44" | outer limiting wall | | |

**Claims**

1. A burner for a combustion chamber of a gas turbine comprising an axial swirler (43) for premixing of oxidizer and fuel in gas turbines, comprising a series of swirl vanes (3) with a streamline cross-section, each swirl vane (3) having a leading edge (38), a trailing edge (39), and a suction side (31) and a pressure side (32) extending each between said leading and trailing edges (38,39), the swirl vanes (3) being arranged around a swirler axis (47), wherein said leading edges (38) extend radially outwardly from said axis (47), wherein flow slots (33) are formed between the suction side (31) of each swirl vane (3) and the pressure side (32) of its circumferentially adjacent swirl vane (3), wherein at least one swirl vane (3) has a discharge flow angle ($\alpha$) between a tangent (37) to its camber line (36) at its trailing edge (39) and the swirler axis (47) that is monotonically increasing with increasing radial distance (R) from the swirler axis (47), wherein at least one of the swirl vanes (3) is configured as an injection device with at least one fuel nozzle (50) for introducing at least one fuel into the burner (1), **characterized in that**, the trailing edge (39) of the swirl vane (3) is curved, and **in that** the dependence of the discharge flow angle ($\alpha$) on said radial distance (R) is implicitly given by a function:

$$\tan[\alpha(R)] = K \cdot R^{\beta} + H,$$

wherein $\beta$ is ranging from 1 to 10, preferably from 3 to 8, being in particular around or exactly 7, and $K$ and $H$ are constants chosen such that the discharge flow angle ($\alpha(R_{min})$) at a minimum radial distance ($R_{min}$) is ranging from 0 degrees to 20 degrees and the discharge flow angle ($\alpha(R_{max})$) at a maximum radial distance ($R_{max}$) is ranging from 30 degrees to 50 degrees, wherein cooling air is introduced through the axial swirler (43) so as to avoid flashback, wherein at least one swirl vane (3) is provided with cooling elements, wherein these cooling elements are given by internal circulation of cooling medium along the sidewalls of the swirl vane (3) and/or by film cooling holes, preferably located near the trailing edge (39), and wherein most preferably the cooling elements are fed with air from the carrier gas feed also used for the fuel injection.

2. The burner according to claim 1, **characterized in that** the leading edge (38) of the swirl vane (3) is an essentially straight edge preferably extending in radial direction and/or the camber line (36) of the swirl vane (3) is curved to form a C-shape or an S-shape.

3. The burner according to any one of claims 1 to 2, **characterized in that** the trailing edge (39) of the swirl vane (3) is rotated with respect to the leading edge (38), preferably such that the trailing edge (39) extends with increasing radial distance (R) increasingly in the direction **in that** the pressure side (32) of the swirl vane (3) faces.

4. The burner according to any one of claims 1 to 3, **characterized in that** the leading edge (38) and/or the trailing edge (39) extend radially outwardly from the swirler axis (47) in a plane perpendicular to the swirler axis (47).

5. The burner according to any one of claims 1 to 4, **characterized in that** all the members of the series of swirl vanes (3) are identically formed and/or **in that** the swirl vanes (3) are arranged around the swirler axis (47) in a circle.

6. The burner (1) according to any one of the preceding claims, **characterized in that** that fuel is injected on the suction side (31) and/or the pressure side (32) of at least one swirl vane (3).

7. The burner (1) according to any one of the preceding claims, **characterized in that** each flow slot (33) has a gas entrance region (34) that extends downstream from the leading edges (38) and a gas discharge region (35) that extends upstream from the trailing edges (39) of its defining swirl vanes (3), wherein the fuel is injected into the flow slot (33) in the gas entrance region (35), preferably in the upstream third of the swirl vane (3) and/or preferably in a cross-flow injection.

8. The burner (1) according to any one of the preceding claims, **characterized in that** the fuel is injected by a series of fuel nozzles (50) being preferably arranged one adjacent another in radial direction, wherein the fuel nozzles (50) are circular and/or are elongated slot nozzles extending essentially parallel to the leading edge (38) of the swirl vane (3) and/or comprise a first nozzle for injection of liquid fuel, and/or a second nozzle for injection of a gaseous fuel and a third nozzle for injection of carrier air, which encloses the first nozzle and/or the second nozzle.

9. A method for operating the burner (1) according to any of the preceding claims **characterized in that** the number of fuel nozzles (50) through which fuel is injected is determined as function of the total injected fuel flow.

10. The method according to claim 9, **characterized in that** the fuel injection is staged below a threshold fuel flow such that the fuel is injected only on the suction side (31) or the pressure side (32) and/or only through every second or third fuel nozzle of a swirl vane (3) and/or that fuel is only injected through the fuel nozzles of every second or third swirl vane (3) of the burner (1).

11. The method according to claim 9 or 10, **characterized in that** the fuel is a highly reactive fuel, preferably chosen from the group consisting of natural gas fuels, hydrogen rich fuels, and hydrogen fuel.

12. Use of the burner (1) according to any one of the preceding claims in an annular combustor, a can combustor, or a single or reheat engine.

**Patentansprüche**

1. Ein Brenner für eine Brennkammer einer Gasturbine umfassend einen Axialwirbelkörper (43) zum Vormischen von Oxidationsmittel und Brennstoff in Gasturbinen, umfassend eine Reihe von Wirbelschaufeln (3) mit einem stromlinienförmigen Querschnitt, wobei jede Wirbelschaufel (3) eine Vorderkante (38), eine Hinterkante (39) sowie eine Saugseite (31) und eine Druckseite (32) aufweist, welche sich zwischen der Vorderkante und der Hinterkante (38, 39) erstrecken, wobei die Wirbelschaufeln (3) um eine Wirbelachse (47) angeordnet sind, wobei besagte Vorderkanten (38) sich radial nach außen ab besagter Achse (47) erstrecken, wobei Strömungsschlitze (33) gebildet sind zwischen der Saugseite (31) jeder einzelnen Wirbelschaufel (3) und der Druckseite (32) seiner umfangsmäßig benachbarten Wirbelschaufel (3), wobei wenigstens eine Wirbelschaufel (3) einen Ausgangsströmungswinkel (a) zwischen einer Tangente (37) an seiner Biegungslinie (36) an seiner Hinterkante (39) und der Drallachse (47) aufweist, welche monoton ansteigt mit zunehmendem radialem Abstand (R) von der Drallachse (47), wobei wenigstens eine der Wirbelschaufeln (3) als eine Einspritzeinrichtung ausgebildet ist mit wenigstens einer Brennstoffdüse (50) zum Einführen wenigstens eines Brennstoffs in den Brenner (1), **dadurch gekennzeichnet, dass** die Hinterkante (39) der Wirbelschaufel (3) gekrümmt ist, und dass die Abhängigkeit des Ausgangsflusswinkels (a) von besagtem radialem Abstand (R) durch die folgende Funktion implizit wiedergegeben wird:

$$\mathrm{Tan}[\alpha(R)] = K \times R^{\beta} + H,$$

wobei $\beta$ sich von 1 bis 10 erstreckt, vorzugsweise von 3 bis 8, vorzugsweise ungefähr oder genau 7, und $K$ und $H$ solchermaßen gewählte Konstanten darstellen, dass der Ausgangsströmungswinkel ($\alpha(R_{min})$) bei einem minimalen radialen Abstand ($R_{min}$) sich von 0 Grad bis 20 Grad erstreckt und der Ausgangsflusswinkel ($\alpha(R_{max})$) bei einem maximalen radialen Abstand ($R_{max}$) sich von 30 bis 50 Grad erstreckt, wobei Kühlluft durch den Axialwirbelkörper (43) eingeführt wird, um Rückschläge zu vermeiden, wobei wenigstens eine Wirbelschaufel (3) mit Kühlelementen versehen ist, wobei diese Kühlelemente durch interne Zirkulation des Kühlmediums gegeben sind entlang der Seitenwände der Wirbelschaufel (3) und/oder durch Filmkühllöcher, bevorzugt bei der hinteren Flanke (39) angeordnet, und wobei besonders bevorzugt die Kühlelemente gespeist werden mit Luft von der Trägergasversorgung auch zur Brennstoffeinspritzung genutzt wird.

2. Der Brenner nach Anspruch 1, **dadurch gekennzeichnet, dass** die Vorderkante (38) der Wirbelschaufel (3) eine im Wesentlichen gerade Kante ist, die sich vorzugsweise in radialer Richtung erstreckt, und/oder die Biegungslinie (36) der Wirbelschaufel (3) zu einer C-Form oder einer S-Form gebogen ist.

3. Der Brenner nach einem der Ansprüche 1 bis 2, **dadurch gekennzeichnet, dass** die Hinterkante (39) der Wirbelschaufel in Bezug auf die Vorderkante (38) rotiert wird, vorzugsweise solchermaßen, dass die Hinterkante (39) sich mit zunehmendem radialen Abstand (R) zunehmend in Richtung der Druckseite (32) der Oberflächen der Wirbelschaufeln (3) erstreckt.

4. Der Brenner nach einem der Ansprüche 1 bis 3, **dadurch gekennzeichnet, dass** die Vorderkante (38) und/oder die Hinterkante (39) sich radial nach außen von der Drallachse (47) erstreckt in einer Ebene senkrecht zur Drallachse (47).

5. Der Brenner nach einem der Ansprüche 1 bis 4, **dadurch gekennzeichnet, dass** alle Mitglieder der Serie von Wirbelschaufeln (3) identisch geformt sind und/oder dass die Wirbelschaufeln (3) in einem Kreis um die Drallachse (47) angeordnet sind.

6. Der Brenner (1) nach einem der vorangehenden Ansprüche, **dadurch gekennzeichnet, dass** der Brennstoff auf der Saugseite (31) und/oder der Druckseite (32) wenigstens einer der Wirbelschaufeln (3) eingespritzt wird.

7. Der Brenner (1) nach einem der vorangehenden Ansprüche, **dadurch gekennzeichnet, dass** jeder Strömungsschlitz (33) einen Gaseintrittsabschnitt (34) aufweist, welcher sich stromabwärts der Vorderkante (38) erstreckt und einen Gasaustrittsabschnitt (35), welcher sich stromaufwärts der Hinterkante (39) seiner definierenden Wirbelschaufel (3) erstreckt, wobei der Brennstoff in den Gaseintrittsbereich (35) des Strömungsschlitzes (33) eingespritzt wird, vorzugsweise dem stromaufwärts obersten Drittel der Wirbelschaufel (3) und/oder vorzugsweise in Kreuzstrom-Einspritzung.

**8.** Der Brenner (1) nach einem der vorangehenden Ansprüche, **dadurch gekennzeichnet, dass** der Brennstoff durch eine Reihe von Brennstoffdüsen (50) eingespritzt wird, welche vorzugsweise einer neben dem anderen in radialer Richtung angeordnet sind, wobei die Brennstoffdüsen (50) kreisrund und/oder verlängerte Schlitzdüsen sind, welche sich im Wesentlichen parallel zu der Vorderkante (38) der Wirbelschaufel (3) erstrecken und/oder eine erste Düse aufweisen zum Einspritzen flüssigen Brennstoffs, und/oder eine zweite Düse zum Einspritzen gasförmigen Brennstoffs und einer dritten Düse zum Einspritzen von Transportluft, welche die erste Düse und/oder die zweite Düse umschließt.

**9.** Verfahren zum Betrieb des Brenners (1) nach einem der vorangehenden Ansprüche, **dadurch gekennzeichnet, dass** die Anzahl der Brennstoffdüsen(50), durch welche der Brennstoff eingespritzt wird, als Funktion des Gesamteinspritzbrennstoffflusses definiert wird.

**10.** Verfahren nach Anspruch 1, **dadurch gekennzeichnet, dass** die Brennstoffeinspritzung so unterhalb eines Schwellwerts des Brennstoffflusses angeordnet ist, dass der Brennstoff nur an der Saugseite (31) oder der Druckseite (42) eingespritzt wird und/oder der Brennstoff nur durch die Brennstoffdüsen jeder zweiten oder dritten Wirbelschaufel (3) des Brenners (1) eingespritzt wird.

**11.** Verfahren nach Anspruch 9 oder 10, **dadurch gekennzeichnet, dass** der Brennstoff ein hochreaktiver Brennstoff ist, vorzugsweise ausgewählt aus der Gruppe bestehend aus Naturgasbrennstoffen, wasserstoffreichen Brennstoffen und Wasserstoffbrennstoffen.

**12.** Verwendung eines Brenners (1) nach einem der vorangehenden Ansprüche in einer ringförmigen Brennkammer, einer Dosenbrennkammer oder einer Einzel- oder Nachverbrennungsmaschine.

**Revendications**

**1.** Brûleur de chambre de combustion de turbine à gaz comprenant un dispositif de génération de turbulences axial (43) destiné à mélanger au préalable un comburant et un combustible dans des turbines à gaz, comprenant une série d'aubes de turbulence (3) qui présentent une section transversale aérodynamique, chaque aube de turbulence (3) présentant un bord d'attaque (38), un bord de fuite (39), et un côté aspiration (31) et un côté pression (32) qui s'étendent chacun entre lesdits bords d'attaque et de fuite (38, 39), les aubes de turbulence (3) étant agencées autour d'un axe du dispositif de génération de turbulences (47), dans lequel lesdits bords d'attaque (38) s'étendent de manière radiale vers l'extérieur à partir dudit axe (47), dans lequel des fentes d'écoulement (33) sont formées entre le côté aspiration (31) de chaque aube de turbulence (3), et le côté pression (32) de son aube de turbulence adjacente de manière circonférentielle (3), dans lequel une aube de turbulence (3) au moins présente un angle de flux de sortie ($\alpha$) entre une tangente (37) avec sa ligne de cambrure (36) au niveau de son bord de fuite (39), et l'axe du dispositif de génération de turbulences (47), qui augmente de manière croissante lorsque la distance radiale ($R$) augmente à partir de l'axe du dispositif de génération de turbulences (47), dans lequel l'une au moins des aubes de turbulence (3) est configurée en tant que dispositif d'injection avec un injecteur de combustible (50) au moins destiné à introduire au moins un combustible dans le brûleur (1) ;
**caractérisé en ce que** le bord de fuite (39) de l'aube de turbulence (3) est incurvé, et **en ce que** la relation entre l'angle de flux de sortie ($\alpha$) et ladite distance radiale ($R$) est implicitement fournie par la fonction :

$$\tan [\alpha(R)] = K \cdot R^{\beta} + H$$

dans laquelle $\beta$ se situe dans une plage comprise entre 1 et 10, de préférence entre 3 et 8, et en particulier autour de 7, ou exactement égal à 7, et $K$ et $H$ sont des constantes sélectionnées de telle sorte que l'angle de flux de sortie ($\alpha(R_{min})$) au niveau de la distance radiale minimum ($R_{min}$) soit compris entre 0 degré et 20 degrés, et que l'angle de flux de sortie ($\alpha(R_{max})$) au niveau de la distance radiale maximum ($R_{max}$) soit compris entre 30 degrés et 50 degrés, dans lequel l'air de refroidissement est introduit à travers le dispositif de génération de turbulences axial (43) de façon à éviter un retour de flammes, dans lequel une aube de turbulence (3) au moins est dotée d'éléments de refroidissement, dans lequel ces éléments de refroidissement sont fournis par une circulation interne d'un milieu de refroidissement le long des parois latérales de l'aube de turbulence (3) et / ou par des trous de refroidissement par film, situés de préférence à proximité du bord de fuite (39), et dans lequel, mieux encore, les éléments de refroidissement sont alimentés avec de l'air en provenance de l'approvisionnement en gaz porteur également utilisé pour l'injection de combustible.

2.  Brûleur selon la revendication 1, **caractérisé en ce que** bord de fuite (38) de l'aube de turbulence (3) est un bord sensiblement droit qui s'étend de préférence dans une direction radiale, et / ou la ligne de cambrure (36) de l'aube de turbulence (3) est incurvée en forme de C ou en forme de S.

3.  Brûleur selon la revendication 1 ou la revendication 2, **caractérisé en ce que** le bord de fuite (39) de l'aube de turbulence (3) est tourné par rapport au bord d'attaque (38), de préférence de telle sorte que le bord de fuite (39) s'étende lorsque la distance radiale (*R*) augmente de plus en plus dans la direction vers laquelle fait face le côté pression (32) de l'aube de turbulence (3).

4.  Brûleur selon l'une quelconque des revendications 1 à 3, **caractérisé en ce que** le bord d'attaque (38) et / ou le bord de fuite (39) s'étendent de manière radiale vers l'extérieur à partir de l'axe du dispositif de génération de turbulences (47) dans un plan perpendiculaire à l'axe du dispositif de génération de turbulences (47).

5.  Brûleur selon l'une quelconque des revendications 1 à 4, **caractérisé en ce que** tous les éléments de la série d'aubes de turbulences (3) sont formés de manière identique et / ou **en ce que** les aubes de turbulences (3) sont agencées en cercle autour de l'axe du dispositif de génération de turbulences (47).

6.  Brûleur (1) selon l'une quelconque des revendications précédentes, **caractérisé en ce que** le combustible est injecté du côté aspiration (31) et / ou du côté pression (32) d'une aube de turbulence (3) au moins.

7.  Brûleur (1) selon l'une quelconque des revendications précédentes, **caractérisé en ce que** chaque fente d'écoulement (33) présente une région d'entrée de gaz (34) qui s'étend en aval à partir des bords d'attaque (38), et une région de sortie de gaz (35) qui s'étend en amont à partir des bords de fuite (39) de ses aubes de turbulences de définition (3), dans lequel le combustible est injecté dans la fente d'écoulement (33) dans la région d'entrée de gaz (35), de préférence dans le tiers amont de l'aube de turbulence (3) et / ou de préférence en une injection en travers de l'écoulement.

8.  Brûleur (1) selon l'une quelconque des revendications précédentes, **caractérisé en ce que** le combustible est injecté par une série d'injecteurs de combustible (50) agencés de préférence adjacents les uns aux autres dans la direction radiale, dans lequel les injecteurs de combustible (50) sont des injecteurs à fente circulaire et / ou allongée qui s'étendent sensiblement parallèles au bord d'attaque (38) de l'aube de turbulence (3), et / ou comprennent un premier injecteur destiné à injecter du combustible liquide, et / ou un deuxième injecteur destiné à injecter un combustible gazeux et un troisième injecteur destiné à injecter de l'air porteur, qui entoure le premier injecteur et / ou le deuxième injecteur.

9.  Procédé destiné à actionner le brûleur (1) selon l'une quelconque des revendications précédentes, **caractérisé en ce que** le nombre d'injecteurs de combustible (50) à travers lesquels est injecté le combustible, est déterminé en fonction du flux total de combustible injecté.

10. Procédé selon la revendication 9, **caractérisé en ce que** l'injection de combustible est étagée sous un flux de combustible seuil de telle sorte que le combustible soit injecté seulement du côté aspiration (31) ou du côté pression (32), et / ou seulement à travers chaque deuxième ou troisième injecteur de combustible d'une aube de turbulence (3), et / ou que le combustible soit injecté seulement à travers les injecteurs de combustible de chaque deuxième ou troisième aube de turbulence (3) du brûleur (1).

11. Procédé selon la revendication 9 ou la revendication 10, **caractérisé en ce que** le combustible est un combustible fortement réactif, sélectionné de préférence dans le groupe constitué par des combustibles de gaz naturel, des combustibles riches en hydrogène, et un combustible à base d'hydrogène.

12. Utilisation du brûleur (1) selon l'une quelconque des revendications précédentes dans une chambre de combustion annulaire, une chambre de combustion tubulaire, ou un moteur simple ou à postcombustion.

**FIG. 1**

**FIG. 2**

FIG. 3

FIG. 4

**Non-dimensional Pressure Loss versus Swirl Number**

FIG. 5

FIG. 6

FIG. 7

**EP 2 728 261 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008148736 A1